# EUROPEAN PATENT SPECIFICATION

(11) **EP 2 759 686 B1**
(45) Date of publication and mention of the grant of the patent: **19.09.2018**
(21) Application number: 11872602.5
(22) Date of filing: 20.09.2011
(51) Int. Cl.: F02B 37/04, F02B 33/44, F02B 39/10, F02D 41/00, F01N 3/20, F01N 5/04, F01N 11/00

(54) **TURBO CHARGER CONTROL SYSTEM AND CONTROL METHOD**
STEUERSYSTEM UND STEUERVERFAHREN FÜR TURBOLADER
SYSTÈME DE COMMANDE ET PROCÉDÉ DE COMMANDE D'UN TURBOCOMPRESSEUR

(43) Date of publication of application: 30.07.2014
(73) Proprietor: Hitachi Zosen Corporation, Osaka-shi, Osaka 559-8559 (JP)
(72) Inventor: BABA, Shinji, Osaka-shi Osaka 559-8559 (JP)
(74) Representative: Hoffmann Eitle
(86) International application number: PCT/JP2011/071360
(87) International publication number: WO 2013/042196

(56) References cited:
- EP-A1- 2 006 516
- WO-A2-03/004847
- DE-A1- 10 349 164
- JP-A- 2006 233 803
- JP-A- 2006 299 892
- JP-A- 2006 307 787
- JP-A- 2006 316 797
- JP-A- 2011 163 269
- US-A1- 2006 236 692

## Description

### TECHNICAL FIELD

The present invention relates to a turbocharger control system and a control method used in an engine provided with a denitration reactor for reducing and removing a nitrogen oxide (referred to below as NOx) in an exhaust gas emission, and disposed in the exhaust passageway on an upstream side of a turbine of a turbocharger.

### BACKGROUND ART

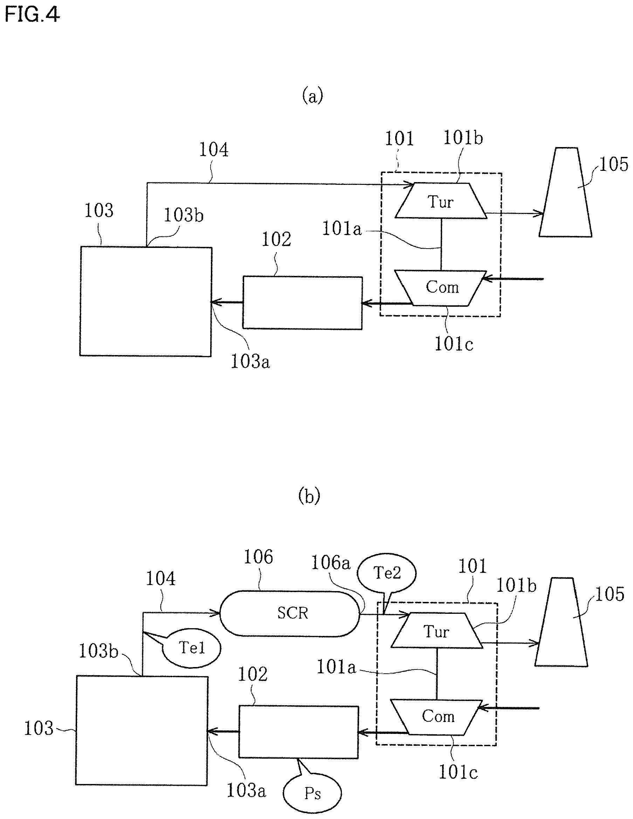

As illustrated in FIG. 4 (a), a typical turbocharger 101 is provided with a turbine 101b and a compressor 101c at both ends of a rotating shaft 101a, and the turbine 101b is rotated by a stream of high-temperature exhaust gas discharged from an exhaust port 103b of an engine 103 into an exhaust passageway 104, and the resulting power drives the compressor 101c. An air which is then compressed by the compressor 101c is fed through a scavenging trunk 102 into a scavenging port 103a of the engine 103.

In cases where there is only the exhaust passageway 104 between the exhaust port 103b and the turbine 101b, the turbocharger 101 operates in approximate synchronization with load fluctuations of the engine 103, for supercharging the engine 103 at a suitable timing.

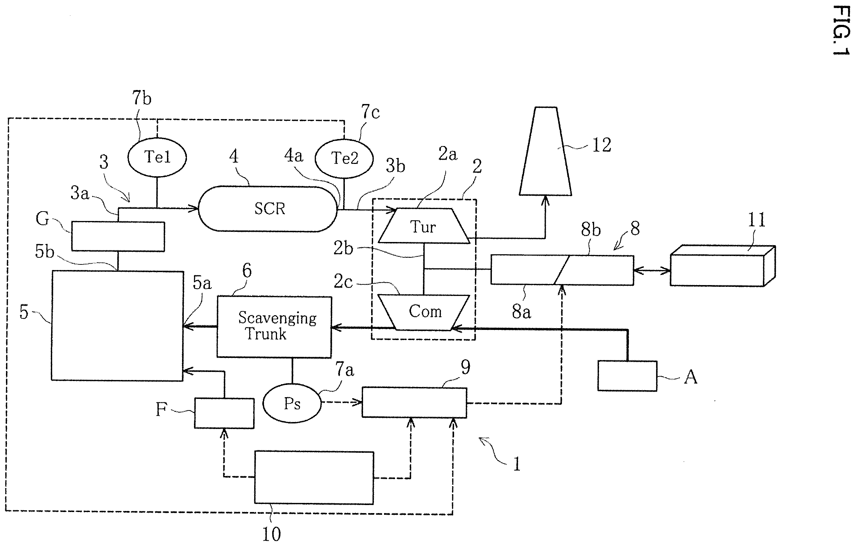

By contrast, in a diesel engine of a ship, as shown in FIG. 4 (b), for example, there are cases in which a denitration reactor 106 is installed in the exhaust passageway 104 between the exhaust port 103b and the turbine 101b (e.g., FIG. 1 on page 42 of Non-Patent Reference 1). The denitration reactor 106 contains an SCR catalyst or the like to detoxify the NOx in the exhaust gas by reacting it with a reducing agent such as ammonia gas to selectively reduce it, breaking it down into nitrogen and water. After removing the NOx, the exhaust gas is discharged from a chimney 105.

However, in the case of an engine having such a denitration reactor 106 installed upstream of the turbine 101b, a certain amount of time is required for the temperature of the SCR catalyst, which has a large heat capacity, to increase in temperature or to cool, so even if the temperature of the exhaust gas discharged from the exhaust port 103b (referred to below as a first exhaust gas temperature Te1) immediately changes in response to a load on the engine, a time lag occurs until there is a change in the temperature of the exhaust gas discharged from a discharge port 106a of the denitration reactor 106 (referred to below as a second exhaust gas temperature Te2).

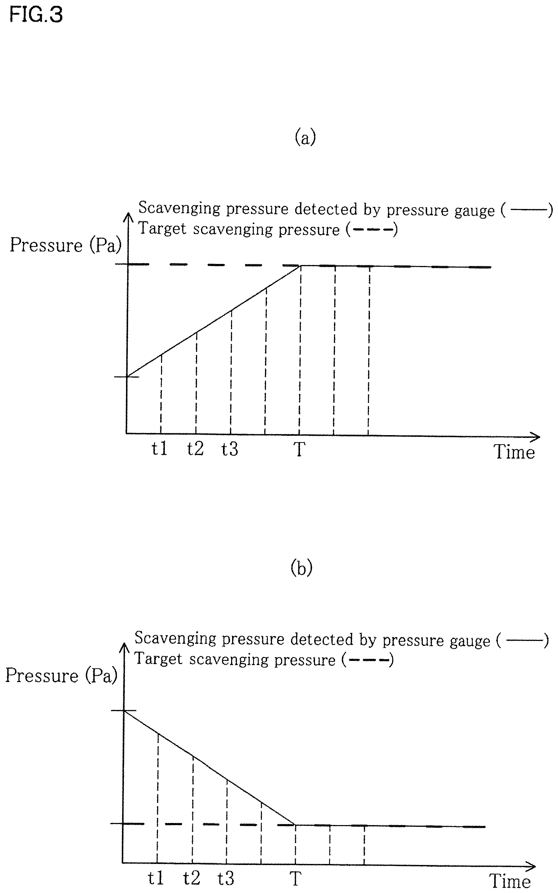

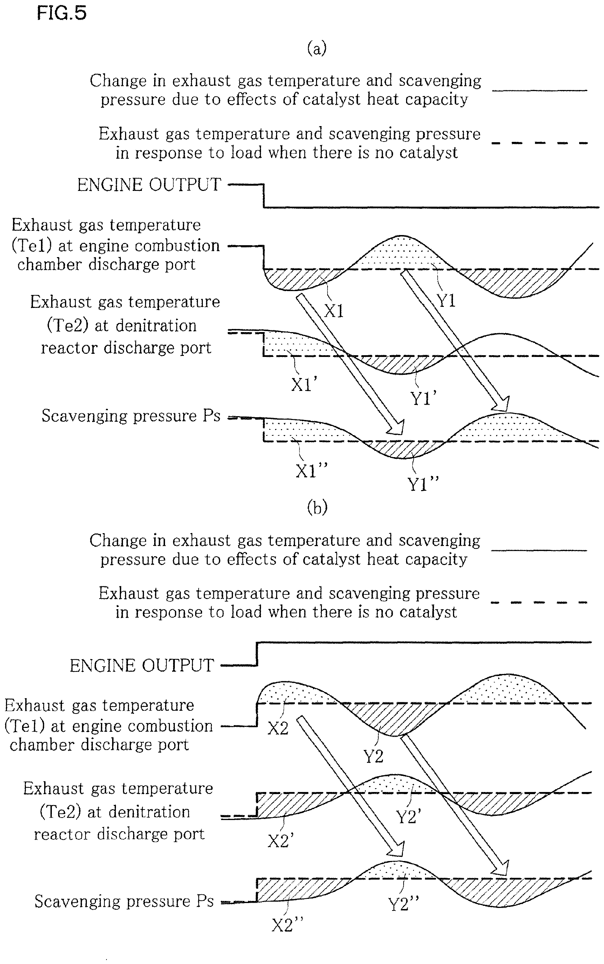

Accordingly, in a diesel engine for a ship, for example, having the denitration reactor 106 installed upstream of the turbine 101b, when a load on the engine 103 was reduced, a scavenging pressure Ps of the scavenging trunk 102 increased above what was necessary, resulting in an excessive supercharging (e.g., FIG. 3 on page 43 of Non-Patent Reference 1), and when a load on the engine 103 was increased, the required scavenging pressure Ps was not obtained, resulting in a hunting phenomenon in which the supercharging was insufficient. The cause for this hunting phenomenon is described in detail below, making reference to FIG. 5.

FIG. 5 (a) is a graph illustrating a case in which an operator decreases the engine load (the number of rotations). When the engine load is decreased, the first exhaust gas temperature Te1 in the exhaust port 103b immediately falls to a level indicated by the symbol X1. However, because the exhaust gas is re-heated by a heat accumulated by the SCR catalyst while passing through the denitration reactor 106, there results a delayed decrease in the second exhaust gas temperature Te2 at the discharge port 106a of the denitration reactor 106, as indicated by the symbol X1'.

The rotational speed of the turbocharger 101 is basically proportional to the temperature of the exhaust gas led into the turbine 101b. Therefore, during the time that the second exhaust gas temperature Te2 does not drop, the rotational speed of the turbocharger 101 is greater than a speed which is commensurate with the engine load, and the scavenging pressure Ps of the scavenging trunk 102 is maintained at an elevated state indicated by the symbol X1'', even though there is a decrease in the load of the engine 103, because the resulting air volume fed from the compressor 101c is also in excess. Accordingly, the engine 103 is in a state of excessive supercharging, and the first exhaust gas temperature Te1 drops further, because an excess of air is introduced into the scavenging port 103a through the scavenging trunk 102.

If such a state of excessive supercharging continues for a while, the second exhaust temperature Te2 drops excessively to a level indicated by the symbol Y1', after a delay for a certain period of time, and along with this, the rotational speed of the turbocharger 101 decreases, and the scavenging pressure Ps also drops excessively to a level indicated by the symbol Y1''.

As a result, the volume of air fed from the compressor 101c is lower than a volume commensurate with the engine load, so the first exhaust gas temperature Te1 rises, as indicated by the symbol Y1. When the engine load is decreased, a phenomenon such as that mentioned above occurs, and is repeated for a while, and requires time until it is resolved.

FIG. 5 (b) is a drawing illustrating a case in which an operator increases the engine load (number of rotations), so a phenomenon occurs which is the reverse of that shown in FIG. 5 (a). First, when the engine load rises, the first exhaust temperature Te1 immediately rises as indicated by the symbol X2, but there is a delay in the rise in the second exhaust temperature Te2, as indicated by the symbol X2', because the SCR catalyst in the denitration reactor 106 has a large heat capacity and it takes time for the temperature to rise.

Therefore, during the time that the second exhaust gas temperature Te2 does not rise, the rotational speed of the turbocharger 101 is lower than a speed commensurate with the engine load, and the scavenging pressure Ps of the scavenging trunk 102 is maintained at a low state indicated by the symbol X2'', even though there is an increase in the load of the engine 103, because the resulting air volume fed from the compressor 101c is also insufficient. Accordingly, the required air is not introduced into the scavenging port 103a, and the engine 103 is in a state of insufficient supercharging, and the first exhaust gas temperature Te1 rises further, because a large quantity of fuel is injected.

If such a state of insufficient supercharging continues for a while, the second exhaust temperature Te2 rises excessively to a level indicated by the symbol Y2', after a delay for a certain period of time, and along with this, the rotational speed of the turbocharger 101 increases, and the scavenging pressure Ps rises excessively to a level indicated by the symbol Y2''.

As a result, the air volume fed from the compressor 101c is greater than a volume commensurate with the engine load, so the first exhaust gas temperature Te1 decreases, as indicated by the symbol Y2. When the engine load is increased, a phenomenon such as that mentioned above is repeated.

During the time that such a hunting phenomenon occurs, the basic function of the turbocharger 101 is not sufficiently actualized, resulting in a malfunctioning of the engine.

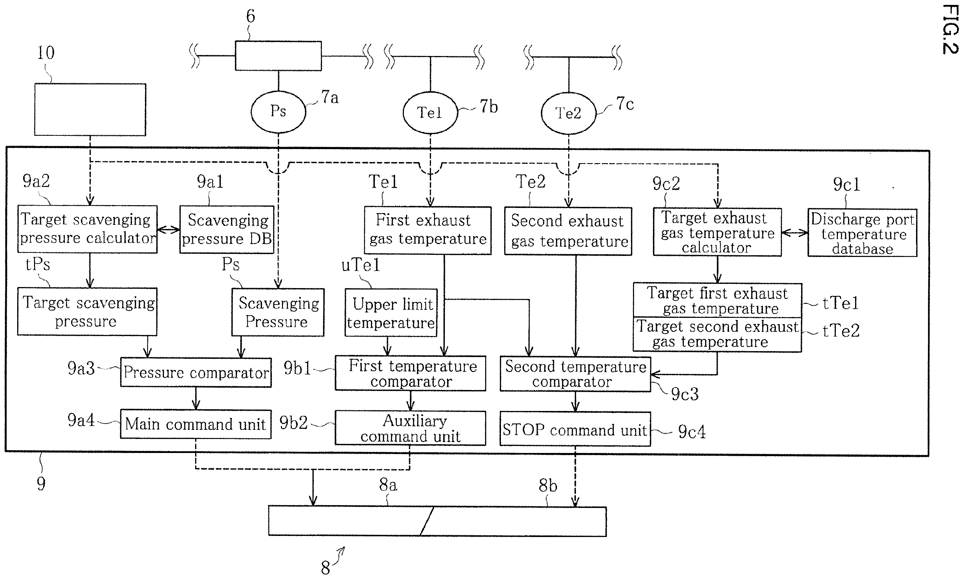

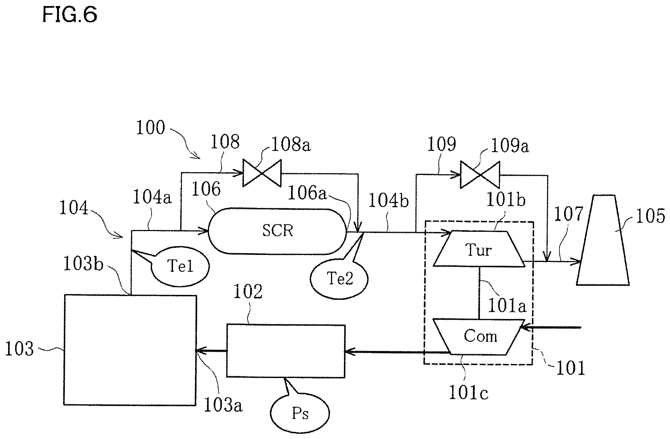

Therefore, in the past, a turbocharger control system 100 was disclosed having a structure as shown in FIG. 6, with a bypass duct 108 which can be opened and closed with a bypass valve 108a, and which is provided to connect an exhaust passageway 104a upstream of the denitration reactor 106 and an exhaust passageway 104b on the downstream side, so that when the engine load is increased, the bypass valve 108a is opened so that a portion of the exhaust gas does not pass through the denitration reactor 106 (e.g., FIG. 8 on page 46 of Non-Patent Reference 1; and FIG. 2 of Patent Reference 1).

This causes a portion of the exhaust gas introduced into the denitration reactor 106 to bypass to upstream of the turbine 101b, so as to increase the rotational speed of the turbine 101b, because the engine 103 is in a state of insufficient supercharging when the engine load is increased.

In the past, there was also disclosed a structure wherein another bypass duct 109 is provided to connect an exhaust passageway 104b upstream of the turbine 101b and an exhaust passageway 107 on the downstream side, so that when the engine load is decreased, a bypass valve 109a is opened so that a portion of the exhaust gas is not fed into the turbine 101b (e.g., FIG. 4, page 44 of Non-Patent Reference 1; and FIG. 1 of Patent Reference 1).

This causes a portion of the exhaust gas fed into the turbine 101b to bypass to downstream of the turbine 101b, so as to prevent an increase in the rotational speed of the turbine 101b, because the engine 103 is in a state of excess supercharging when the engine load is decreased.

However, in the prior art turbocharger control system 100, there was a problem of pollution of the environment occurring when untreated gas containing NOx that had not been reduced and purified was discharged from the chimney 105 into the atmosphere, because a portion of the exhaust gas did not pass through the denitration reactor 106 during the time that the bypass valve 108a was open.

In addition, energy was lost from the exhaust gas, because a portion of the exhaust gas could not be used since it flowed to the exhaust passageway 107 downstream of the turbine 101b during the time that the bypass valve 109a was open.

### PRIOR ART REFERENCES

### NON- PATENT REFERENCES

Non-Patent Reference 1: Osamu Motomura, et al., "Dynamic Characteristics of a Two-Stroke Slow-Speed Diesel Engine with De-Nox System," Journal of the Marine Engineering Society of Japan, Vol. 34, No. 1, p. 41-47 (January 1999)

### PATENT REFERENCES

Patent Reference 1: Japanese Patent Publication No. H08-500170.

Moreover, EP 2 006 516 A1 discloses an exhaust gas turbocharger comprising a compressor and a turbine combined with a motor/generator and further comprising adjustable vanes, which are adjustable in function of a pressure at receiving side of an engine, as scavenging pressure gradient, and an electric power.

### SUMMARY OF THE INVENTION

### PROBLEMS TO BE SOLVED BY THE INVENTION

The problems which the present invention aims to solve are that in a turbocharger control system according to the prior art, the NOx in the exhaust gas was not reduced and purified when the gas bypassed the denitration reactor, and also that a loss of energy occurred in the exhaust gas when it was caused to bypass the turbine.

The present invention was devised with consideration given to the above problems, and has as its object to provide a turbocharger control system and control method which prevents hunting, and which makes possible a continuous purification treatment without bypassing a denitration reactor even when the engine is in a state of insufficient supercharging, and which is also able to operate effectively without any loss of energy in the exhaust gas even when the engine is in a state of excessive supercharging.

### MEANS FOR SOLVING THESE PROBLEMS

A turbocharger control system according to the present invention is defined by the combination of features of claim 1. A turbocharger control method according to the present invention is defined by the combination of features of claim 3. Dependent claims address preferred embodiments.

The turbocharger control system and control method according to the present invention comprises, as its most essential features:
a pressure gauge that detects a scavenging pressure within a scavenging trunk;
a motor that assists or dampens a driving of the turbocharger;
a generator that charges a power storage device with a regenerated electric power of the motor; and
a control unit which comprises a target scavenging pressure calculator which accesses a scavenging pressure database to compute a target scavenging pressure, a pressure comparator which compares a scavenging pressure detected by the pressure gauge against a target scavenging pressure computed by the target scavenging pressure calculator, and a main command unit which controls the motor or the generator in response to comparison results made by the pressure comparator.

The system further comprises a first temperature gauge provided in an exhaust passageway between the exhaust port of the engine and the denitration reactor to detect a first exhaust gas temperature, which is a temperature of an exhaust gas discharged from an exhaust port. The control unit further comprises a first temperature comparator which computes a difference between an upper limit temperature for preventing catalyst degradation within the denitration reactor and the first exhaust gas temperature, and an auxiliary command unit which issues a command to accelerate the rotational speed of the motor when the temperature difference computed by the first temperature comparator is within a predetermined range.

A drive control of the turbocharger which employs the turbocharger control system according to the present invention utilizes the pressure comparator to compare a difference between the scavenging pressure and the target scavenging pressure at predetermined time intervals.

When the engine accelerates, the main command unit assists the driving of the turbocharger by issuing a command for the rotational speed of the motor to accelerate during a period when the scavenging pressure is lower than the target scavenging pressure.

When the engine decelerates, the main control unit dampens the driving of the turbocharger by issuing a command to the generator to charge the power storage device during a period when the scavenging pressure is higher than the target scavenging pressure.

This is the turbocharger control method according to the present invention.

### ADVANTAGEOUS EFFECTS OF THE INVENTION

According to the present invention, when an operator increases the engine load and the engine is in a state of insufficient supercharging, the main command unit of the control unit issues a command to supply power to the motor, to assist the driving of the turbocharger by the rotation of the motor. It is therefore possible to eliminate insufficient supercharging of the engine without bypassing the denitration reactor, and to prevent hunting.

In addition, according to the present invention, when an operator decreases the engine load and the engine is in a state of excessive supercharging, the main command unit of the control unit issues a command to the generator to charge a regenerated electric power from the motor, so as to dampen a driving of the turbocharger, while converting a rotational torque of the turbocharger to electrical energy. Moreover, the electrical power generated by the generator is temporarily stored in the power storage device, so it can be used as a driving power of the motor when engine load is increased. It is therefore possible to achieve an effective operation without discarding exhaust gas energy to outside of the system, while also preventing hunting.

### BRIEF DESCRIPTION OF THE DRAWINGS

FIG. 1 is a schematic drawing illustrating the structure of the turbocharger control system according to the present invention.
FIG. 2 is a block diagram illustrating the structure of the control unit of the turbocharger control system according to the present invention.
FIG. 3 (a) is a graph illustrating a control whereby a command is issued to accelerate the rotational speed of a motor to assist the driving of the turbocharger when the engine is accelerating and when the scavenging pressure is lower than the target scavenging pressure. FIG. 3 (b) is a graph illustrating a control whereby a command is issued to the generator to charge the power storage device to dampen driving the turbocharger when the engine is decelerating and when the scavenger pressure is higher than the target scavenging pressure.
FIG. 4 (a) is a diagram illustrating a typical turbocharger. FIG. 4 (b) is a drawing illustrating a diesel engine for a ship having a denitration reactor installed upstream of a turbine.
FIG. 5 is a graph illustrating changes in scavenging pressure Ps in a scavenging trunk at a first exhaust gas temperature Te1 at an exhaust port and at a second exhaust gas temperature Te2 at a discharge port of a denitration reactor. FIG. 5 (a) illustrates the case where the engine load has been decreased, and FIG. 5 (b) illustrates the case where the engine load has been increased.
FIG. 6 is a schematic diagram illustrating the structure of a turbocharger control system according to the prior art.

### EMBODIMENTS OF THE INVENTION

Various embodiments of the present invention are described in detail below, making use of FIGS. 1-3. In FIG. 1, Reference Numeral 1 is a turbocharger control system according to the present invention employed in a diesel engine for a ship, provided with a denitration reactor 4 installed in an exhaust passageway 3 upstream of a turbine 2a of a turbocharger 2. The turbocharger control system 1 is provided with a pressure gauge 7a installed in a scavenging trunk 6 and is used to detect a scavenging pressure Ps within the scavenging trunk 6 connected to a scavenging port 5a of an engine 5, a motor 8a that assists or dampens a driving of the turbocharger 2 and which is provided to a rotating shaft 2b of the turbocharger 2, a power storage device 11 which supplies a driving power to the motor 8a, and a generator 8b that charges the power storage device 11 with a regenerated electric power of the motor 8a. This embodiment utilizes a motor/generator 8 which combines the function of the motor 8a and the function of the generator 8b. Reference Numeral 10 is a rotational speed controller which controls the injection volume of a fuel F supplied to the engine 5 and which is able to transmit the engine speed data set by an operator to a control unit 9. Reference Numeral 12 is a chimney which discharges the exhaust gas after the NOx has been reduced and purified.

The denitration reactor 4 contains an SCR catalyst which selectively reduces the NOx in an exhaust gas by reacting it with a reducing agent such as ammonia gas, breaking it down into nitrogen and water, to achieve detoxification. In an exhaust passageway 3a upstream of the denitration reactor 4 there is installed a nozzle (not pictured) for spraying a reducing agent precursor such as aqueous urea which forms ammonia gas when subjected to hydrolysis.

As shown in FIG. 2, the control unit 9 is provided with at least a target scavenging pressure calculating means 9a2 which accesses a scavenging pressure database 9a1 to compute a target scavenging pressure tPs in response to engine speed data obtained from the rotational speed controller 10, a pressure comparator 9a3 which compares a scavenging pressure Ps in the scavenging trunk 6 detected by the pressure gauge 7a against the target scavenging pressure tPs computed by the target scavenging pressure calculator 9a2, and a main command unit 9a4 which controls a drive power supplied to the motor 8a in response to the results of a pressure comparison from the pressure comparator 9a3, and which also issues a command to the generator 8b to charge the power storage device 11 with a regenerated electric power of the motor 8a.

The scavenging pressure database 9a1 is a database in the form of a table derived from experimental data for the target scavenging pressure tPs which represent suitable scavenging pressures in response to rotational speeds of the engine 5. This database can be searched using the engine rotational speed data set by an operator as a key. The details of the data which is registered in advance in the scavenging pressure database 9a1 will differ depending on the type and size of the engine.

The method of controlling the driving of the turbocharger using the first embodiment according to the present invention is described in terms of separate cases, one in which the engine load is increased, and another in which the engine load is decreased.

### (1) Control method when the engine load is increased

When an operator sets the engine speed so as to raise it to accelerate the engine 5, the rotational speed controller 10 supplies the fuel F to the engine 5 in an injection volume corresponding to the set engine speed. In addition, the rotational speed controller 10 detects the increase in the rotational speed of the engine 5 and issues a command to the control unit 9 to start implementing the control method of the present invention.

The target scavenging pressure calculator 9a2 of the control unit 9 obtains from the rotational speed controller 10 the engine speed data set by the operator, and uses this as a key to check the scavenging pressure database 9a1 to obtain from the scavenging pressure database 9a1 the target scavenging pressure tPs data corresponding to the set rotational speed data.

The target scavenging pressure calculator 9a2 of this embodiment uses raw data registered in the scavenging pressure database 9a1, but the target scavenging pressure tPs may include values with additional required corrections of data registered in the scavenging pressure database 9a1 as basic data.

An air A is compressed by the compressor 2c and fed into the scavenging trunk 6. The pressure gauge 7a detects the scavenging pressure Ps inside the scavenging trunk 6.

The pressure comparator 9a3 of the control unit 9 fetches the scavenging pressure Ps data detected by the pressure gauge 7a at predetermined time intervals, and computes the difference in value as compared to the target scavenging pressure tPs computed by the target scavenging pressure calculator 9a2.

As illustrated in FIG. 3 (a), when the engine accelerates, the main command unit 9a4 issues a command to the control circuit of the motor 8a to accelerate the rotational speed of the motor 8a during a period in which the scavenging pressure Ps is lower than the target scavenging pressure tPs (in the example given in the graph, the period from time 0 to time T), thereby increasing the driving power of the motor 8a supplied from the power storage device 11, and assisting the driving of the turbocharger 2. In control of this type, the scavenging pressure Ps data is fetched at predetermined time intervals, and is repeated at intervals in which the scavenging pressure Ps is determined by the pressured comparator 9a3 to be lower than the target scavenging pressure tPs (in the example given in the graph, it is repeated at times t1, t2, t3 .....).

When the scavenging pressure Ps reaches the target scavenging pressure tPs, the main command unit 9a4 issues a command to the control circuit of the motor 8a not to raise the rotational speed of the motor 8a above this level.

### (2) Control method when the engine load is decreased

When an operator sets the engine speed so as to lower it to decelerate the engine 5, the rotational speed controller 10 decreases the injection volume of the fuel F supplied to the engine 5 in response to the set engine speed. In addition, the rotational speed controller 10 detects the decrease in the rotational speed of the engine 5 and issues a command to the control unit 9 to start implementing the control method of the present invention.

The target scavenging pressure calculator 9a2 of the control unit 9 obtains from the rotational speed controller 10 the engine speed data set by the operator, uses this as a key to check the scavenging pressure database 9a1 to obtain from the scavenging pressure database 9a1 the target scavenging pressure tPs data corresponding to the set rotational speed data.

The pressure comparator 9a3 fetches the scavenging pressure Ps data detected by the pressure gauge 7a at predetermined time intervals, and computes the difference in value as compared to the target scavenging pressure tPs computed by the target scavenging pressure calculator 9a2.

As illustrated in FIG. 3 (b), when the engine decelerates, the main command unit 9a4 issues a command to the control circuit of the generator 8b to charge the regenerated electric power from the motor 8a to the power storage device 11 during a period in which the scavenging pressure Ps is higher than the target scavenging pressure tPs (in the example given in the graph, the period from time 0 to time T), thereby dampening the driving of the turbocharger 2. In control of this type, the scavenging pressure Ps data is fetched at predetermined time intervals, and is repeated at intervals in which the scavenging pressure Ps is determined by the pressure comparator 9a3 to be higher than the target scavenging pressure tPs (in the example given in the graph, it is repeated at times t1, t2, t3 .....).

When the scavenging pressure Ps reaches the target scavenging pressure tPs, the main command unit 9a4 issues a command to the control circuit of the generator 8b not to charge above this level, so as not to decrease the rotational speed of the motor 8a.

When the rotational speed of the engine 5 is constant, the rotational speed controller 10 does not detect an increase or decrease in the engine speed, so no command is issued to the control unit 9 to start implementing the control method of the present invention.

Following is a description of another embodiment of the present invention. In this second embodiment, as shown in FIG. 1, a first temperature gauge 7b for detecting the first exhaust gas temperature Te1, the temperature of an exhaust gas G discharged from an exhaust port 5b, is provided in the exhaust passageway 3a between the exhaust port 5b of the engine and the denitration reactor 4, as the gas goes through a cycle of compression, combustion, expansion, and supply/exhaust (scavenging).

As shown in FIG. 2, the control unit 9 is further provided with a first temperature comparator 9b1 which computes the difference between an upper limit temperature uTe1 for preventing catalyst degradation within the denitration reactor 4 and the first exhaust gas temperature Te1, as well as an auxiliary command unit 9b2 which issues a command to accelerate the rotational speed of the engine 8a when the temperature difference computed by the first temperature comparator 9b1 is within a predetermined range.

The upper limit temperature uTe1 is a temperature at an upper limit for preventing catalyst degradation when the exhaust gas G passes through the denitration reactor 4, and the data for this upper limit temperature is set in the control unit 9 in advance. Moreover, the range of temperatures which are to be monitored to serve as criteria for this upper limit temperature uTe1, and the data for this upper limit temperature are set in the control unit 9 in advance, depending on the type and size of the engine. In addition, in cases where the first exhaust gas temperature Te1 is conjectured to exceed the upper limit temperature uTe1, depending on sea conditions such as stormy weather and the like, the data for such cases is set in the control unit 9 in advance.

In such a construction, the control unit 9 monitors the first exhaust gas temperature Te1 of the exhaust gas G which is introduced into the denitration reactor 4, and when this enters a range in which there is a high risk of exceeding the upper limit temperature uTe1 which was set in advance, the auxiliary command unit 9b2 is able to make a correction so as to accelerate the rotational speed of the motor 8a. The rotational speed of the turbocharger 2 can therefore be increased, thereby making it possible to advantageously prevent degradation of the catalyst, because it is possible to decrease the first exhaust gas temperature Te1 by increasing the scavenging volume supplied to the scavenging port 5a.

Following is a description of a method of controlling driving of the turbocharger by employing the second embodiment of the present invention.

The first temperature comparator 9b1 fetches the first exhaust gas temperature Te1 data detected by the first temperature gauge 7b at predetermined time intervals, and compares the difference between it and the upper limit temperature uTe1.

When the difference between the first exhaust gas temperature Te1 and the upper limit temperature uTe1 is within a predetermined range, the control unit 9 accelerates the rotational speed of the motor 8a by the amount of acceleration commanded by the auxiliary command unit 9b2.

Moreover, when the difference between the first exhaust gas temperature Te1 and the upper limit temperature uTel is within a predetermined range, and when the scavenging pressure Ps is lower than the target scavenging pressure tPs, the control unit 9 adds together the amount of acceleration commanded by the main command unit 9a4 and the amount of acceleration commanded by the auxiliary command unit 9b2 accelerates the rotational speed of the motor 8a by the resulting amount.

Therefore, even in the event of a highly risky state in which the first exhaust gas temperature Te1 during acceleration of the engine 5 exceeds the upper limit temperature uTe1, commands to increase the rotational speed of the motor 8a are simultaneously issued by the main command unit 9a4 and the auxiliary command unit 9b2 to accelerate rotation of the rotating shaft 2b of the turbocharger 2 only by the two amounts of acceleration added together, so the system is able to advantageously prevent hunting and is also able to prevent degradation of the catalyst.

When the above-described control is repeated at predetermined time intervals, and the temperature difference between the first exhaust gas temperature Te1 and the upper limit temperature uTel is outside of the predetermined range, the auxiliary command unit 9b2 stops issuing commands to the control circuit of the motor 8a.

Following is a description of yet another embodiment of the present invention. As shown in FIG. 1, in this third embodiment, there is provided a second temperature gauge 7c that detects the second exhaust gas temperature Te2 which is the temperature of the exhaust gas after purifying it of NOx discharged from a discharge port 4a, the second temperature gauge 7c being installed in an exhaust passageway 3b between the discharge port 4a of the denitration reactor 4 and the turbine 2a.

As shown in FIG. 2, the control unit 9 is further provided with a target exhaust gas temperature calculator 9c2 which accesses a discharge port temperature database 9c1, and computes a target first exhaust gas temperature tTe1 and a target second exhaust gas temperature tTe2 corresponding to engine rotational speed data obtained from the rotational speed controller 10; a second temperature comparator 9c3 which computes the difference between the first exhaust gas temperature Te1 and the target first exhaust gas temperature tTe1, as well as the difference between the second exhaust gas temperature Te2 and the target second exhaust gas temperature tTe2; and a STOP command unit 9c4 which issues a command to stop driving the motor 8a or the generator 8b when the temperature differences computed by the second temperature comparator 9c3 are both within a predetermined range.

The discharge port temperature database 9c1 is in the form of a table derived from experimental data for the target first exhaust gas temperature tTe1 which is the ideal discharge output temperature at the exhaust port 5b corresponding to the rotational speed of the engine 5, and from experimental data for the target second exhaust gas temperature tTe2 at the discharge port 4a of the denitration reactor 4. This database can be searched using the engine rotational speed data set by an operator as a key. The details of the data which is registered in advance in the discharge port temperature database 9c1 will differ depending on the type and size of the engine.

When a configuration such as that described above is used, the control unit 9 monitors the first exhaust gas temperature Te1 and the second exhaust gas temperature Te2, and when the difference between these temperatures is within a predetermined range, the STOP command unit 9c4 is able to issue a CONTROL STOP command to the motor 8a and the generator 8b. This is advantageous, because the operations of assisting or dampening the turbocharger 2 can be stopped according to a timing such that there is no longer a temperature difference (between the first exhaust gas temperature Te1 and the second exhaust gas temperature Te2) due to the effects of the heat capacity of the SCR catalyst in the denitration reactor 4. As a result, the turbocharger 2 can resume normal operation.

Following is a description of a method of controlling the driving of the turbocharger by employing the third embodiment of the present invention.

The second temperature comparator 9c3 fetches the first exhaust gas temperature Te1 data detected by the first temperature gauge 7b and the second exhaust gas temperature Te2 data detected by the first temperature gauge 7c at predetermined time intervals, and compares the difference between the target first exhaust gas temperature tTe1 and the target second exhaust gas temperature tTe2.

The STOP command unit 9c4 issues a command to stop driving the motor 8a or the generator 8b when the temperature differences computed by the second temperature comparator 9c3 both continue to stay within a predetermined range for a specified amount of time.

Therefore, driving of the motor 8a or the generator 8b can be advantageously restricted to a required range, because the temperature difference is kept within a permissible range, while checking in real time, this temperature difference resulting from the effects of the heat capacity of the SCR catalyst in the denitration reactor 4, and because the turbocharger 2 is able to resume normal operation in which the turbocharger 2 is neither assisted nor dampened, at the most suitable timing at which this state is maintained for a predetermined time.

In a control method according to the third embodiment described above, the rotational speed controller 10 is started when an increase or decrease in the rotational speed of the engine 5 is detected, and stopped when the STOP command unit 9c4 of the control unit 9 issues a STOP command.

As described above, according to the present invention, when the operator increases the engine load, the main command unit of the control unit issues a command for a driving power to be supplied to the motor so as to assist the driving of the turbocharger by the rotation of the motor, thus making it possible to eliminate insufficient supercharging of the engine without bypassing the denitration reactor. Therefore, the entire amount of the exhaust gas can be continuously purified, without there being any untreated gas.

Moreover, according to the present invention, when the operator decreases the engine load, the main command unit of the control unit issues a command to the generator to charge a regenerated electric power from the motor, thereby dampening the driving of the turbocharger. The power generated by the generator is stored in the power storage device, so it can be utilized as a driving power for the motor. Therefore, the energy of the exhaust gas can be effectively utilized, without discarding it to outside of the system.

Accordingly, the present invention is able to prevent hunting and is able to stabilize the operation of an engine equipped with a pre-turbo denitration reactor, by supplying and recovering energy by connecting both the motor and the generator to the rotating shaft of the turbocharger.

The present invention is not limited to the above-described examples, and the embodiment may, of course, be advantageously modified within the scope of the technical ideas recited in the claims.

For example, in the foregoing embodiments there was disclosed an example in which the target exhaust gas temperature calculator 9c2 utilized data registered in the discharge port temperature database 9c1, but values may be utilized such that the target first exhaust gas temperature tTe1 and the target second exhaust gas temperature tTe2 include additional required corrections of data registered in the scavenging pressure database 9a1 as basic data.

Moreover, in cases where the operator has not issued any commands to change the engine load, but fluctuations in engine load occur due to sea conditions such as stormy weather, suitable control may be implemented to operate or not to operate the system of the present invention in each of the foregoing examples, depending on whether or not a threshold value which has been pre-set in the control unit 9 has been exceeded. That is because cases where hunting induced by sea conditions exceeds a certain threshold value are deemed as being equivalent to a situation in which the operator significantly changes the engine load.

### EXPLANATION OF THE REFERENCE NUMERALS

- 1: Turbocharger control system
- 2: Turbocharger
- 2a: Turbine
- 3, 3a, 3b: Exhaust passageways
- 4: Denitration reactor
- 4a: Discharge port
- 5: Engine
- 5b: Exhaust port
- 6: Scavenging trunk
- 7a: Pressure gauge
- 7b: First temperature gauge
- 7c: Second temperature gauge
- 8a: Motor
- 8b: Generator
- 9: Control unit
- 9a1: Scavenging pressure database
- 9a2: Target scavenging pressure calculator
- 9a3: Pressure comparator
- 9a4: Main command unit
- 9b1: First temperature comparator
- 9b2: Auxiliary command unit
- 9c1: Discharge port temperature database
- 9c2: Target exhaust gas temperature calculator
- 9c3: Second temperature comparator
- 9c4: STOP command unit
- 11: Power storage device
- Ps: Scavenging pressure
- tPs: Target scavenging pressure
- Te1: First exhaust gas temperature
- Te2: Second exhaust gas temperature
- uTe1: Upper limit temperature
- tTe1: Target first exhaust gas temperature
- tTe2: Target second exhaust gas temperature
- G: Exhaust gas

## Claims

1. A turbocharger control system (1) in an engine (5) having a denitration reactor (4) installed in an exhaust passageway (3) upstream of a turbine (2a) of a turbocharger (2), the system (1) comprising:
a pressure gauge (7a) that detects a scavenging pressure (Ps) within a scavenging trunk (6);
a motor (8a) that assists or dampens a driving of the turbocharger (2);
a generator (8b) that charges a power storage device (11) with a regenerated electric power of the motor (8a): and
a control unit (9) which comprises a target scavenging pressure calculator (9a2) which accesses a scavenging pressure database (9a 1) to compute a target scavenging pressure (tPs), a pressure comparator (9a 3) which compares a scavenging pressure (ps) detected by the pressure gauge (7a) against a target scavenging pressure (tPs) computed by the target scavenging pressure calculator (9a2), and a main command unit (9a4) which controls the motor (8a) or the generator (8b) in response to comparison results made by the pressure comparator (9a3).
a first temperature gauge (7b) provided in an exhaust passageway (3) between the exhaust port (5b) of the engine (5) and the denitration reactor (4) to detect a first exhaust gas temperature (Tel), which is a temperature of an exhaust gas (G) discharged from an exhaust port (5b). **characterized in that**,
the control unit (9) further comprises a first temperature comparator (9b1) which computes a difference between an upper limit temperature (uTe1) for preventing catalyst degradation within the denitration reactor (4) and the first exhaust gas temperature (Te1), and an auxiliary command unit (9b2) which issues a command to accelerate the rotational speed of the motor (8a) when the temperature difference computed by the first temperature comparator (9b1) is within a predetermined range.

2. The turbocharger control system (1) according to claim 1, further comprising a second temperature gauge (7c) provided in an exhaust passageway (3) between the denitration reactor (4) and the turbine (2a) to detect a second exhaust gas temperature (Te2) which is a temperature of the exhaust gas (G) discharged from a discharge port (4a) of the denitration reactor (4). wherein the control unit (9) further comprises:
a target exhaust gas temperature calculator (9c2) which accesses a discharge port temperature database (9c1), and computes a target first exhaust gas temperature (tTe1) and a target second exhaust gas temperature (tTe2),
a second temperature comparator (9c3) which computes a difference between the first exhaust gas temperature (Te1) and the target first exhaust gas temperature (tTe1), as well as a difference between the second exhaust gas temperature (Te2) and the target second exhaust gas temperature (tTe2), and
a STOP command unit (9c4) which issues a command to stop driving the motor (8a) or the generator (8b) when the temperature differences computed by the second temperature comparator (9c3) are both within a predetermined range.

3. A turbocharger control method for controlling a driving of a turbocharger (2) which uses the turbocharger control system (1) according to claim 1, the method comprising:
comparing, by the pressure comparator (9a3), a difference between the scavenging pressure and the target scavenging pressure at predetermined time intervals;
when the engine (5) accelerates, assisting a driving of the turbocharger (2) by the main command unit (9) which issues a command for the rotational speed of the motor (2a) to accelerate during a period when the scavenging pressure is lower than the target scavenging pressure; and
when the engine (5) decelerates, dampening the driving of the turbocharger (2) by the main command unit (9) which issues a command to the generator (8b) to charge the power storage device (11) during a period when the scavenging pressure is greater than the target scavenging pressure.

4. A turbocharger control method for controlling a driving of a turbocharger (2) which uses the turbocharger control system (1) according to claim 1, the method comprising:
comparing, by the first comparator (9b1), the first exhaust air temperature and the upper limit temperature at predetermined time intervals;
accelerating, by the auxiliary command unit (9b2), a rotational speed of the motor (8a) by an amount of acceleration commanded when the difference between the first exhaust gas temperature and the upper limit temperature is within a predetermined range; and
accelerating the rotational speed of the motor (8a) by adding together the amount of acceleration commanded by the main command unit (9) and the amount of acceleration commanded by the auxiliary command unit (9b2), when the difference between the first exhaust gas temperature and the upper limit temperature is within a predetermined range, and when the scavenging pressure is lower than the target scavenging pressure.

5. A turbocharger control method for controlling a driving of a turbocharger (2) which uses the turbocharger control system (1) according to claim 2, the method comprising:
comparing, by the second temperature comparator (9c3), the difference between the first exhaust gas temperature and the target first exhaust gas temperature and the difference between the second exhaust gas temperature and the target second exhaust gas temperature at predetermined time intervals; and
issuing, by the STOP command unit (9c4), a command to stop driving the motor (8a) or the generator (8b) when the temperature differences computed by the second temperature comparator (9c4) both continue to stay within a predetermined range for a specified amount of time.

## Patentansprüche

1. Steuersystem (1) für Turbolader in einem Motor (5), der einen Denitrierungsreaktor (4) aufweist, der in einem Abgaskanal (3) stromaufwärts einer Turbine (2a) eines Turboladers (2) installiert ist, wobei das System (1) Folgendes umfasst:
ein Druckmessgerät (7a), das einen Spüldruck (Ps) in einem Spülbehälter (6) erfasst;
einen Motor (8a), der ein Antreiben des Turboladers (2) unterstützt oder dämpft;
einen Generator (8b), der eine Leistungsspeichervorrichtung (11) mit einer regenerierten elektrischen Leistung des Motors (8a) lädt; und
eine Steuereinheit (9), die einen Zielspüldruckrechner (9a2) umfasst, der auf eine Spüldruckdatenbank (9a1) zugreift, um einen Zielspüldruck (tPs) zu berechnen, einen Druckkomparator (9a3), der einen Spüldruck (ps), der durch das Druckmessgerät (7a) erfasst wird, mit einem Zielspüldruck (tPs) vergleicht, der durch den Zielspüldruckrechner (9a2) berechnet wird und eine Hauptbefehlseinheit (9a4), die den Motor (8a) oder den Generator (8b) als Reaktion auf Vergleichsergebnisse steuert, die von dem Druckkomparator (9a3) gemacht werden;
ein erstes Temperaturmessgerät (7b), das in einem Abgaskanal (3) zwischen der Ausstoßöffnung (5b) des Motors (5) und dem Denitrierungsreaktor (4) vorgesehen ist, um eine erste Abgastemperatur (Te1) zu erfassen, die eine Temperatur eines Abgases (G) ist, das von einer Abgasöffnung (5b) ausgestoßen wird,
**dadurch gekennzeichnet, dass** die Steuereinheit (9) weiter einen ersten Temperaturkomparator (9b1) umfasst, der eine Differenz zwischen einer oberen Grenztemperatur (uTe1) zum Verhindern einer Katalysatordegradation innerhalb des Denitrierungsreaktors (4) und der ersten Abgastemperatur (Te1) berechnet und eine Hilfsbefehlseinheit (9b2), die einen Befehl zum Beschleunigen der Drehzahl des Motors (8a) ausgibt, wenn die durch den ersten Temperaturkomparator (9b1) berechnete Temperaturdifferenz innerhalb eines vorbestimmten Bereichs liegt.

2. Steuersystem (1) für Turbolader nach Anspruch 1, weiter umfassend ein zweites Temperaturmessgerät (7c), das in einem Abgaskanal (3) zwischen dem Denitrierungsreaktor (4) und der Turbine (2a) vorgesehen ist, um eine zweite Abgastemperatur (Te2) zu erfassen, die eine Temperatur des Abgases (G) ist, das von einer Ausstoßöffnung (4a) des Denitrierungsreaktors (4) ausgestoßen wird, wobei die Steuereinheit (9) weiter umfasst:
eine Berechnungseinheit (9c2) für Zielabgastemperaturen, die auf eine Temperaturdatenbank (9c1) für Ausstoßöffnungen zugreift und eine erste Abgastemperatur (tTe1) und eine zweite Zielabgastemperatur (tTe2) berechnet,
einen zweiten Temperaturkomparator (9c3), der eine Differenz zwischen der ersten Abgastemperatur (Te1) und der ersten Zielabgastemperatur (tTe1) sowie eine Differenz zwischen der zweiten Abgastemperatur (Te2) und der zweiten Zielabgastemperatur (tTe2) berechnet und
eine STOP-Befehlseinheit (9c4), die einen Befehl ausgibt, um den Antrieb des Motors (8a) oder des Generators (8b) anzuhalten, wenn die durch den zweiten Temperaturkomparator (9c3) berechneten Temperaturdifferenzen beide innerhalb eines vorbestimmten Bereichs liegen.

3. Steuerverfahren für Turbolader zur Steuerung eines Antriebs eines Turboladers (2), der das Steuersystem (1) für Turbolader nach Anspruch 1 verwendet, wobei das Verfahren umfasst:
Vergleichen einer Differenz zwischen dem Spüldruck und dem Zielspüldruck durch den Druckkomparator (9a3) in vorbestimmten Zeitintervallen;
wenn der Motor (5) beschleunigt, Unterstützung eines Antriebs des Turboladers (2) durch die Hauptbefehlseinheit (9), die einen Befehl für die Drehzahl des Motors (2a) ausgibt, um während einer Periode zu beschleunigen, wenn der Spüldruck niedriger als der Zielspüldruck ist; und
wenn der Motor (5) abbremst, Dämpfen des Antriebs des Turboladers (2) durch die Hauptbefehlseinheit (9), die einen Befehl an den Generator (8b) ausgibt, um die Leistungsspeichervorrichtung (11) während einer Periode zu laden, wenn der Spüldruck größer als der Zielspüldruck ist.

4. Steuerverfahren für Turbolader zur Steuerung eines Antriebs eines Turboladers (2), der das Steuersystem (1) für Turbolader nach Anspruch 1 verwendet, wobei das Verfahren Folgendes umfasst:
Vergleichen der ersten Ablufttemperatur und der oberen Grenztemperatur in vorbestimmten Zeitintervallen durch den ersten Komparator (9b1);
Beschleunigen einer Drehzahl des Motors (8a) durch die Hilfsbefehlseinheit (9b2) um eine Beschleunigungsgröße, die befohlen wird, wenn die Differenz zwischen der ersten Abgastemperatur und der oberen Grenztemperatur innerhalb eines vorbestimmten Bereichs liegt; und
Beschleunigen der Drehzahl des Motors (8a) durch Addieren der von der Hauptbefehlseinheit (9) befohlenen Beschleunigungsgröße und der Hilfsbefehlseinheit (9b2) befohlenen Beschleunigungsgröße, wenn die Differenz zwischen der ersten Abgastemperatur und der oberen Grenztemperatur innerhalb eines vorbestimmten Bereichs liegt und wenn der Spüldruck niedriger als der Zielspüldruck ist.

5. Steuerverfahren für Turbolader zur Steuerung eines Antriebs eines Turboladers (2), der das Steuersystem (1) für Turbolader nach Anspruch 2 verwendet, wobei das Verfahren Folgendes umfasst:
Vergleichen der Differenz zwischen der ersten Abgastemperatur und der ersten Zielabgastemperatur und der Differenz zwischen der zweiten Abgastemperatur und der zweiten Zielabgastemperatur in vorgegebenen Zeitintervallen durch den zweiten Temperaturkomparator (9c3); und
Ausgeben eines Befehls durch die STOP-Befehlseinheit (9c4), um den Antrieb des Motors (8a) oder des Generators (8b) anzuhalten, wenn die Temperaturdifferenzen, die durch den zweiten Temperaturkomparator (9c4) berechnet werden, beide für eine bestimmte Zeitdauer in einem vorbestimmten Bereich bleiben.

## Revendications

1. Système de contrôle de turbocompresseur (1) dans un moteur à combustible (5) ayant un réacteur de dénitration (4) installé dans un passage d'échappement (3) en amont d'une turbine (2a) d'un turbocompresseur (2), le système (1) comprenant :
une jauge de pression (7a) qui détecte une pression de balayage (Ps) à l'intérieur d'un collecteur de balayage (6) ;
un moteur (8a) qui assiste ou amortit un entraînement du turbocompresseur (2) ;
un générateur (8b) qui charge un dispositif de stockage d'énergie (11) avec une énergie électrique régénérée du moteur (8a) ; et
une unité de contrôle (9) qui comprend un calculateur de pression de balayage cible (9a2) qui accède à une base de données de pression de balayage (9a1) pour calculer une pression de balayage cible (tPs), un comparateur de pression (9a3) qui compare une pression de balayage (ps) détectée par la jauge de pression (7a) à une pression de balayage cible (tPs) calculée par le calculateur de pression de balayage cible (9a2), et une unité de commande principale (9a4) qui contrôle le moteur (8a) ou le générateur (8b) en réponse à des résultats de comparaison obtenus par le comparateur de pression (9a3),
une première jauge de température (7b) prévue dans un passage d'échappement (3) entre l'orifice d'échappement (5b) du moteur à combustible (5) et le réacteur de dénitration (4) pour détecter une première température de gaz d'échappement (Te1), qui est une température d'un gaz d'échappement (G) évacué à partir d'un orifice d'échappement (5b),
**caractérisé en ce que**,
l'unité de contrôle (9) comprend en outre un premier comparateur de température (9b1) qui calcule une différence entre une température limite supérieure (uTe1) pour empêcher une dégradation du catalyseur à l'intérieur du réacteur de dénitration (4) et la première température de gaz d'échappement (Te1), et une unité de commande auxiliaire (9b2) qui émet une commande pour accélérer la vitesse de rotation du moteur (8a) lorsque la différence de température calculée par le premier comparateur de température (9b1) est à l'intérieur d'une plage prédéterminée.

2. Système de contrôle de turbocompresseur (1) selon la revendication 1, comprenant en outre une seconde jauge de température (7c) prévue dans un passage d'échappement (3) entre le réacteur de dénitration (4) et la turbine (2a) pour détecter une seconde température de gaz d'échappement (Te2) qui est une température du gaz d'échappement (G) évacué à partir d'un orifice d'évacuation (4a) du réacteur de dénitration (4), dans lequel l'unité de contrôle (9) comprend en outre :
un calculateur de température de gaz d'échappement cible (9c2) qui accède à une base de données de température d'orifice d'évacuation (9c1), et calcule une première température de gaz d'échappement cible (tTe1) et une seconde température de gaz d'échappement cible (tTe2),
un second comparateur de température (9c3) qui calcule une différence entre la première température de gaz d'échappement (Te1) et la première température de gaz d'échappement cible (tTe1), ainsi qu'une différence entre la seconde température de gaz d'échappement (Te2) et la seconde température de gaz d'échappement cible (tTe2), et
une unité de commande d'ARRÊT (9c4) qui émet une commande pour arrêter l'entraînement du moteur (8a) ou du générateur (8b) lorsque les différences de température calculées par le second comparateur de température (9c3) sont toutes deux à l'intérieur d'une plage prédéterminée.

3. Procédé de contrôle de turbocompresseur pour contrôler un entraînement d'un turbocompresseur (2) qui utilise le système de contrôle de turbocompresseur (1) selon la revendication 1, le procédé comprenant :
la comparaison, par le comparateur de pression (9a3), d'une différence entre la pression de balayage et la pression de balayage cible à des intervalles de temps prédéterminés ;
lorsque le moteur à combustible (5) accélère, l'assistance d'un entraînement du turbocompresseur (2) par l'unité de commande principale (9) qui émet une commande pour que la vitesse de rotation du moteur (2a) accélère durant une période lorsque la pression de balayage est inférieure à la pression de balayage cible ; et
lorsque le moteur à combustible (5) décélère, l'amortissement de l'entraînement du turbocompresseur (2) par l'unité de commande principale (9) qui émet une commande au générateur (8b) pour qu'il charge le dispositif de stockage d'énergie (11) durant une période lorsque la pression de balayage est supérieure à la pression de balayage cible.

4. Procédé de contrôle de turbocompresseur pour contrôler un entraînement d'un turbocompresseur (2) qui utilise le système de contrôle de turbocompresseur (1) selon la revendication 1, le procédé comprenant :
la comparaison, par le premier comparateur (9b1), de la première température d'air d'échappement et de la température limite supérieure à des intervalles de temps prédéterminés ;
l'accélération, par l'unité de commande auxiliaire (9b2), d'une vitesse de rotation du moteur (8a) par une quantité d'accélération commandée lorsque la différence entre la première température de gaz d'échappement et la température limite supérieure est à l'intérieur d'une plage prédéterminée ; et
l'accélération de la vitesse de rotation du moteur (8a) en ajoutant ensemble la quantité d'accélération commandée par l'unité de commande principale (9) et la quantité d'accélération commandée par l'unité de commande auxiliaire (9b2), lorsque la différence entre la première température de gaz d'échappement et la température limite supérieure est à l'intérieur d'une plage prédéterminée, et lorsque la pression de balayage est inférieure à la pression de balayage cible.

5. Procédé de contrôle de turbocompresseur pour contrôler un entraînement d'un turbocompresseur (2) qui utilise le système de contrôle de turbocompresseur (1) selon la revendication 2, le procédé comprenant :
la comparaison, par le second comparateur de température (9c3), de la différence entre la première température de gaz d'échappement et la première température de gaz d'échappement cible et de la différence entre la seconde température de gaz d'échappement et la seconde température de gaz d'échappement cible à des intervalles de temps prédéterminés ; et
l'émission, par l'unité de commande d'ARRÊT (9c4), d'une commande pour arrêter l'entraînement du moteur (8a) ou du générateur (8b) lorsque les différences de température calculées par le second comparateur de température (9c4) continuent toutes deux à rester à l'intérieur d'une plage prédéterminée pendant une durée spécifiée.
